# EUROPEAN PATENT SPECIFICATION

(11) **EP 4 654 092 B1**
(45) Date of publication and mention of the grant of the patent: **18.11.2026**
(21) Application number: 24305787.4
(22) Date of filing: 21.05.2024
(51) Int. Cl.: G06N 10/70, G06N 10/40

(54) **PROTECTED SUPERCONDUCTING QUBITS FROM HOMOLOGICAL QUANTUM ROTOR CODES**
GESCHÜTZTE SUPRALEITENDE QUBITS AUS HOMOLOGISCHEN QUANTENROTORCODES
BITS QUANTIQUES SUPRACONDUCTEURS PROTÉGÉS PROVENANT DE CODES DE ROTOR QUANTIQUE HOMOLOGIQUE

(43) Date of publication of application: 26.11.2025
(73) Proprietor: INSTITUT NATIONAL DE RECHERCHE EN INFORMATIQUE ET EN AUTOMATIQUE - INRIA, 78105 Le Chesnay (FR)
(72) Inventor: VUILLOT, Christophe, 54000 Nancy (FR)
(74) Representative: Vidon Brevets & Stratégie

(56) References cited:
- CHRISTOPHE VUILLOT ET AL: "Homological Quantum Rotor Codes: Logical Qubits from Torsion", ARXIV.ORG, CORNELL UNIVERSITY LIBRARY, 201 OLIN LIBRARY CORNELL UNIVERSITY ITHACA, NY 14853, 24 March 2023 (2023-03-24), XP091468128
- YIJIA XU ET AL: "Clifford operations and homological codes for rotors and oscillators", ARXIV.ORG, CORNELL UNIVERSITY LIBRARY, 201 OLIN LIBRARY CORNELL UNIVERSITY ITHACA, NY 14853, 28 February 2024 (2024-02-28), XP091689356

## Description

### Technical background

### I Quantum computing - using superconducting circuits

Quantum computation is defined as quantum circuits acting on qubits or qudits. The realization of controllable qubits - for quantum bits - using superconducting circuit is a current area of research by academic actors as well as of development by industry actors. Several designs of superconducting circuits to implement qubits exist, one of them being the well-known transmon consisting in a Josephson junction in parallel with a large capacitor.

These systems are naturally prone to noise and recent research endeavour takes interests in so-called protected or noise-protected superconducting qubits. A protected superconducting qubit should intrinsically be less affected by perturbations. This intrinsic robustness may come from a very careful design of the Hamiltonian of the system. Several proposals exist, notably Kitaev's superconducting current mirror qubit also known as the Möbius strip qubit (Kitaev, 2006, Weiss, 2019 and US7858966B2) and the "0-π"-qubit (Brooks, 2013).

Encodings of a qubit into a rotating body such as that of a molecule or many qubits into a single planar rotor are known. The inventor and co-authors introduced a new class of quantum error correcting codes, named homological quantum rotor codes and based on stabilizer subspaces to encode information. The invention relates to such homological quantum rotor codes in superconducting circuit systems. Such codes allow designing superconducting qubits protected against both charge and flux noises, and for which increasing the system size increases the protection.

### II Homological Quantum Rotor Codes

Homological quantum rotor codes use multiple quantum rotors to encode logical information. These codes generalize homological or CSS quantum codes (CSS stands for Calderbank, Shor and Steane, for the names of the inventors of these error correction or stabilizer codes) for qubits or qudits (a qudit being a generalized qubit obtained by allowing the superposition of d states, d being an natural integer higher than 2), as well as linear oscillator codes.

As mentioned above, the homological quantum rotor codes are codes defined for a set of n quantum rotors.

A system of n quantum rotors has generalized Pauli operators acting on the j^{th} rotor according to ${X}_{j} \left(m\right) {\left|n\right〉}_{j} = {\left|n+m\right〉}_{j} ,$ ${Z}_{j} \left(ϕ\right) {\left|n\right〉}_{j} = {e}^{iϕn} {\left|n\right〉}_{j} ,$

Where the subscript j indicates the jth rotor.

For a multi-rotor Pauli operator, the operators are $m ∈ {ℤ}^{n} , X \left(m\right) = {\prod }_{j = 1}^{n} {X}_{j} \left({m}_{j}\right) ,$ $ϕ ∈ {T}^{n} , Z \left(ϕ\right) = {\prod }_{j = 1}^{n} {Z}_{j} \left({ϕ}_{j}\right) .$

Bold vector notations are used for row vectors m and *Φ*.

Given H_{X} and H_{Z} two integer matrices of size rₓ x n and r_{z} x n respectively, such that ${H}_{X} {H}_{Z}^{T} = 0 .$ the stabilizer group being a group of operators, S: $S = \left〈Z\left({φH}_{Z}\right)X\left({sH}_{X}\right)\left|∀φ∈{T}^{{r}_{z}},∀s∈{ℤ}^{{r}_{x}}\right.\right〉 .$ (T being the phase group [0, 2pi])
a homological quantum rotor code is C^{rot}(HX, HZ) on n quantum rotors as the subspace stabilized by S: ${C}^{rot} \left({H}_{X}, {H}_{Z}\right) = \left\{\left|ψ\right〉\left|∀P∈S, P\left|ψ\right〉=\left|ψ\right〉\right.\right\} .$

The codespace, i.e. the subspace stabilized by S, can consist in logical qubits, qudits or rotors (non exclusively). We are particularly interested in codes for which the codespace consists in logical qubits.

The minimal X-distance (sometimes called for simplicity X-distance), denoted d_{X}, of a homological quantum rotor code, defined by its H_{X} and H_{Z} matrices, is the minimal 1-norm over any length-n integer vector in the kernel of the H_{Z} matrix and not in the row-image of the H_{X} matrix.

The 1-norm is known in the art: it is the sum of the absolute values of the entries of a vector.

The kernel of a matrix, here the H_{Z} matrix, is known in the art: it is defined by all the length n integer vectors such that multiplying them on the left by the H_{Z} matrix yields the all-zero vector.

The row-image of a matrix, here the H_{X} matrix, is also known in the art: it is the group of all the vectors obtained as linear combination with integer coefficients of the rows of H_{X}.

The minimal X-distance is related to the amount of protection against errors acting as X operators on the system offered by the code.

By increasing the X-distance, the circuit is better protected against flux noise. Simple homological rotor codes are defined by matrices H_{X} and H_{Z} with entries equal to -1, 0 or +1.

Homological Quantum Rotor Code with bounded connectivity ie with a number of non-zero entries in each row and column bounded by a constant are sparse codes. Those with constant connectivity can be considered as easier to manipulate and are thus advantageous.

The invention systematically builds a superconducting circuit for any simple and sparse or even non-sparse homological quantum rotor code, called the target code. Sparse codes are advantageous since the connectivity is controlled and does not elevate much.

And the Hamiltonian corresponding to the superconducting circuit in its low energy approximation implements a version of the homological quantum rotor code that is the concatenation of a small 2-rotor code with the target code.

This small 2-rotor code encodes a single logical rotor D=C^{rot}(H^{D}_{X},H^{D}_{Z}), the rotor code defined by H^{D}_{X}=0 and H^{D}_{Z}= (1 1) called the doubling code, D.

The stabilizer group of D is given by ${S}^{D} = \left〈Z\left(ϕ, ϕ\right)\left|ϕ∈T\right.\right〉 .$

Its logical operators are ${\overline{X}}^{D} \left(m\right) = X \left(m,-m\right)$ ${\overline{Z}}^{D} \left(ϕ\right) = Z \left(ϕ, 0\right) ∼ Z \left(0,-ϕ\right) .$

The parameters of D are [2, (1,0), (2,1/2)]ᵣₒₜ.

The implemented code or heavy version of a homological rotor code, C, is obtained by concatenating it with the doubling code D.

The resulting code, C_{heavy}, has twice as many physical rotors as the initial C, and is obtained by doubling the number of column of H_{X} and H_{Z} and replacing any entry m in H_{X} by the pair (m, -m) and any entry m in H_{Z} by (m, 0) as well as adding (n) rows in H_{Z} corresponding to S^{D} for each of the n rotors in C.

If C has parameters [n, (k,d₁d₂ ... d_{k'}), (d_{X},*δ*_{Z})]ᵣₒₜ then its heavy version C_{heavy} has related parameters [2n, (k,d₁d₂ ... d_{k'}), (2d_{X},≥ *δ*_{Z}/2)]ᵣₒₜ.

If C is simple, then all the X-stabilizers of the heavy code have as many +1 as -1.

Still in the case where C is simple, a generating set of the (Z)-stabilizers of the heavy code in which all are constant, and thus containing only +1 or only -1, can be used.

Both the superconducting current mirror and "0- π" qubits are implementations of some specific homological quantum rotor codes. The noise protection can be understood in terms of the parameters of the parent codes which are detailed in Vuillot, 2023.

Other constructions involving a large number of nodes have been proposed, in Loffe, 2022, Gladchenko, 2008, and WO2019204680A1.

These previous superconducting circuit designs were designed and analysed on a case by case basis. A lack of precise control over noise reduction properties versus system structure can account, in part, for limitations in these approaches.

In Vuillot, 2023, it is also concluded engineering an electric network which implements all code constraints is challenging, since designing a capacitive network of nodes which is suitably composed of disjoint connected components brings capacitive constraints acting and identification issues. In CHRISTOPHE VUILLOT ET AL: "Homological Quantum Rotor Codes: Logical Qubits from Torsion", ARXIV.ORG, CORNELL UNIVERSITY LIBRARY, 201 OLIN LIBRARY CORNELL UNIVERSITY ITHACA, NY 14853, the version of 24 March 2023, a Method of designing a superconducting circuit for implementing noise-protected qubits or qudits and utilizing a predefined number of ordered quantum rotors is described.

A systematic construction of a superconducting circuit starting from any homological quantum rotor code is thus presented herebelow.

### The invention

The superconducting circuit obtained implements a homological quantum rotor code related to a simple code, called the heavy code, with parameters proportional to or bounded by the original code.

The invention provides a method of designing a superconducting circuit for implementing noise-protected qubits (or qudits or rotors), the method, for a predefined number of ordered quantum rotors, comprising selecting two initial matrices H_{X} and H_{Z} of an identical number of columns equal to the number of quantum rotors, having all entries in {-, 0, +} (meaning any group of three objects (this can be {-1; 0; +1}), and with H_{X}H_{Z}^{T} = 0, and implementing the following steps to design or build a circuit
∘ (step 1) For each quantum rotor creating at least one pair of first type nodes and for each pair of first type nodes placing a first type capacitor between said two first type nodes of one pair,
∘ (step 2) Creating a second type node for each of the non-zero entries of the H_{z} matrix, and for each second type node placing inductances between the second type node and the first type nodes associated to the rotors associated to said second type node in the H_{Z} matrix depending on the value of the associated entry of the H_{Z} matrix,
∘ (step 3) For each row of the H_{Z} matrix, placing second type capacitors between second type nodes to form a connected graph,
∘ (step 4) For each row of the H_{X} matrix, placing Josephson Junctions between first type nodes to form a closed loop with first type capacitors depending on the content of said row of the H_{X} matrix, Josephson junctions and first type capacitors being placed alternately in said closed loop.

Because of the condition H_{X}H_{Z}^{T} = 0, the matrices Hx and Hz define an error correction code.

Step 3 creates the energy constraints corresponding to Z-stabilizing and steps 1 and 4 create the energy constraints that correspond to X-stabilizing.

Step 2 creates a link between the various variables in order to have the constraints applying on the same components.

The states of the system at low energy are thus the states of a code, named the heavy code, the parameters of which are proportional to parameters of the initial code,
Given any homological quantum rotor code, with parameters [n, (k,k'), (dₓ, d_{z})] a systematic description of a superconducting circuit implementing the heavy-code with parameters [2n, (k, k'), (2dₓ, d_{z}/2)] is given.

The circuits obtained are composed of Josephson junctions, capacitors and inductors. One particularity is that all nodes should have a large capacitance to the ground, with the capacitance in the circuit be orders of magnitude larger than the capacitance to ground, except for the capacitances associated with the Josephson junctions which are orders of magnitude smaller.

The Josephson Junctions should have a small stray (or parasitic) capacitance. The inductances should also have a small stray capacitance while having a large inductance value. This last point can be implemented using large Josephson junction arrays.

According to certain optional and advantageous features:
- Only one pair of first type nodes is created for each quantum rotor.
- Or for each quantum rotor several pairs of first type nodes are created on the basis of the X-stabilizers matrix - one for each non-zero entry of the H_{X} matrix.
- the circuit can be an annulus and closing of the circuit is obtained by adapted orientations along a line of rotors.
- Or the circuit can a Möbius strip.
- The two matrices H_{X} and H_{Z} may have a number of non-zero entries in each row and column bounded by a constant. This allows the implementation to be more easily performed.
- But, the whole system doesn't have to be an annulus or a Mobius strip in general: these are interesting but not limiting examples.
- The connectivity can be of any kind but it is advantageous that Implementing the code (or designing the circuit) is performed tessellating a strip with edges embodying the rotors and defining vertices and faces forming for the rotors the Z-stabilizers and the X stabilizers based on the X-stabilizers and Z-stabilizers matrices.
- The connected graph (in step 3) can be a closed loop.

Indeed, for some homological quantum rotor codes the superconducting circuit obtained can be layed out on a 2D chip.

This gives concrete families of superconducting circuits of increasing sizes which correspond to tunable code parameters and in turn tunable levels of protection with the system structure (size, arrangement, ...).

This allows concrete implementation of protected superconducting qubits which exhibit intrinsic robustness to noise.

Fabricating and controlling such system can then be done using existing techniques developed for superconducting circuits.

A concrete example of a code family, herebelow called the rotated sign-twisted cylinder is laid out in 2D in an annulus shape with a small number of crossing wires. This solution gives a way to implement superconducting qubits with an embedded level of protection against the noise which is tuned by choosing the size and layout of the circuit. A large class of codes and therefore superconducting circuits are accessible and the system complexity which can be controlled.

Depending on the parameters of the circuit elements, the ground space of the system can be degenerate and given by the logical codespace of the rotor code. That means that at sufficiently low temperature the logical information stored is protected and the level of protection is related to the parameters of the code.

The invention is also a superconducting circuit for implementing a noise-protected qubit or qudit or noise-protected qubits or qudits, the circuit being obtained by the method of the invention, and the minimal X-distance of the code d_{X} being 3 or higher than 3. These circuits have a higher protection against flux noise that the circuit known from Kitaev, 2006 and Brooks, 2013.

### List of figures

Figure 1 is an illustration of the circuit design rule in a first embodiment.
Figure 2 shows an example of a design following the rules of figure 1.
Figures 3 and 4 show examples of circuits designed following the principles of figures 1 and 2.
Figure 5 is an illustration of the circuit design rule in a second embodiment.
Figure 6 shows an example of a circuit designed following the rules of figure 5.

### Description in relation to the figures

A superconducting circuit includes dipoles such as capacitors, inductances and Josephson junctions and a set of nodes (superconducting islands), each circuit element being between two nodes.

When two nodes nᵢ and nⱼ are linked by a capacitor C, an inductance L or a Josephson junction with Josephson energy E_{J}, respectively, it is recorded as $C \left({n}_{i}, {n}_{j}\right) = C ,$ $L \left({n}_{i}, {n}_{j}\right) = L ,$ $J \left({n}_{i}, {n}_{j}\right) = {E}_{J} .$

C, L and J are symmetric.

When there is no link between two nodes nᵢ and nⱼ then C(nᵢ,nⱼ)=L(nᵢ,nⱼ)=J(nᵢ,nⱼ)=0.

A circuit design rule producing a superconducting circuit implementing the heavy version of any simple homological quantum rotor code is now described.

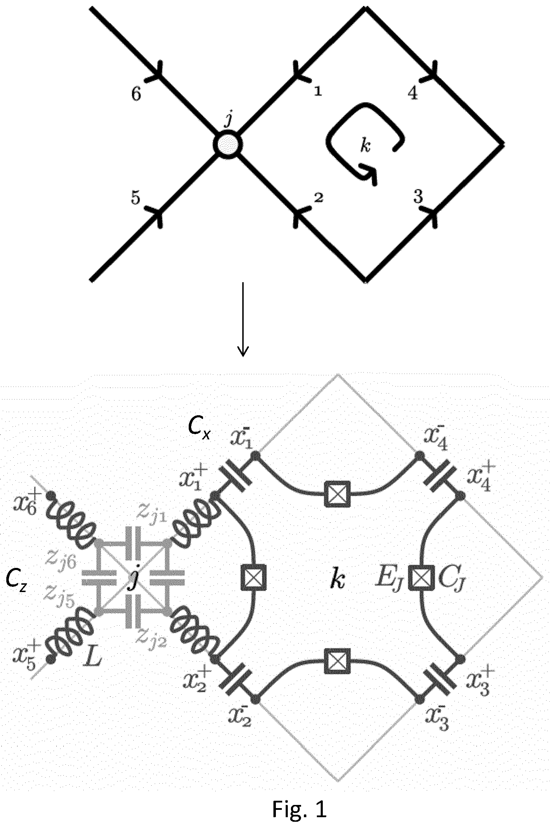

### [Fig.1] Circuit Design Rule - first embodiment

Given a simple homological quantum rotor code, C = C^{rot}(H_{X}, H_{Z}), on n quantum rotors, and C_{heavy}, its heavy version, a superconducting circuit implementing C_{heavy} is defined below. On the upper part of the figure, rotors are indicated from 1 to 6, in the example. They define several faces and vertices, only one face and one vertex being presented for the sake of illustration on the figure. The face has 4 edges in the given example and an orientation (out of two possible orientations) given by a curved arrow.

### Defining Nodes

As a start, one (single) ground node g is created (not represented).

Then for each rotor of the code two nodes are created. The nodes from the rotor with index k are denoted xₖ⁺ and xₖ⁻.

For each non-zero entry of H_{Z} a node zⱼₖ, corresponding to the position (j,k) is also created.

Overall there are N nodes with $N = 2 n + {\left|{H}_{Z}\right|}_{1} + 1 ,$ where | |₁ the 1-norm so it corresponds, as already mentioned, to the number of non-zero entries in the case where the entries are in -1,0,+1.

If C is sparse, N is linear in n.

### Placing Capacitors

Every node is connected to the ground node with large capacitor C_{g}. This applies to the x nodes $C \left({x}_{k}^{\pm }, g\right) = {C}_{g} ,$

And also for the z nodes: for all relevant j and k (i.e. H_{z}(j,k) ≠ 0 meaning that there is a z node indexed by the specific z,k values) $C \left({z}_{jk}, g\right) = {C}_{g} .$

Then for each rotor of the n rotors (or each index k corresponding to a rotor) a large capacitor of a first value Cₓ is placed linking the x⁺ₖ and x⁻ₖ nodes $C \left({x}_{k}^{+}, {x}_{k}^{-}\right) = {C}_{x}$

These are aimed at enforcing the Z-stabilizer of the doubling code.

For each row of H_{Z}, indexed by j, a circle of large capacitors Cₓ, linking the corresponding nodes zⱼₖ with k spanning the non-zero entries of the row is further created.

k₁,k₂,...,kₘⱼ being the indexes of the non-zero entries of the j^{th} row of H_{Z}, then $\begin{matrix}C \left({z}_{{jk}_{1}}, {z}_{{jk}_{2}}\right) = {C}_{z} \\ C \left({z}_{{jk}_{2}}, {z}_{{jk}_{3}}\right) = {C}_{z} \\ ⋮ \\ C \left({z}_{{jk}_{{m}_{j}}}, {z}_{{jk}_{1}}\right) = {C}_{z}\end{matrix}$

These capacitors are Z-stabilizers of the code on disjoint clusters of nodes.

### Placing Josephson Junctions

For each row of H_{X}, indexed by j, an alternating circle of large capacitor C, and Josephson junction with characteristic energy E_{J} (and a small capacitor C_{J}) is further created.

k₁,k₂,...,kₘⱼ being the indices of the non-zero entries of the j^{th} row of H_{X}.

A Josephson junction is then put between *x*^{±}ₖₗ and *x*^{±}ₖₗ₊₁ depending on the signs in the j^{th} row of H_{X} as follows. Thus ${s}_{l} = {H}_{X} \left(j, {k}_{l}\right) ,$ $\begin{matrix}J \left({x}_{{k}_{1}}^{{s}_{1}}, {x}_{{k}_{2}}^{- {s}_{2}}\right) = {E}_{J} , & C \left({x}_{{k}_{1}}^{{s}_{1}}, {x}_{{k}_{2}}^{- {s}_{2}}\right) = {C}_{J} , \\ J \left({x}_{{k}_{2}}^{{s}_{2}}, {x}_{{k}_{3}}^{- {s}_{3}}\right) = {E}_{J} , & C \left({x}_{{k}_{2}}^{{s}_{2}}, {x}_{{k}_{3}}^{- {s}_{3}}\right) = {C}_{J} , \\ ⋮ & ⋮ \\ J \left({x}_{{k}_{{m}_{j}}}^{{s}_{{m}_{j}}}, {x}_{{k}_{1}}^{- {s}_{1}}\right) = {E}_{J} , & C \left({x}_{{k}_{{m}_{j}}}^{{s}_{{m}_{j}}}, {x}_{{k}_{1}}^{- {s}_{1}}\right) = {C}_{J} .\end{matrix}$

These Josephson junction generate pertubatively the X-stabilizers of the heavy version of the code.

A different choice of order for the k₁,...,kₘⱼ lead to a different circuit but the Josephson junctions behave all equivalently. It is thus interesting to choose the order making the layout the simplest.

At this point, z nodes and x nodes are only capacitively connected via the ground node.

### Placing Inductances

Inductances are then used to identify certain nodes together.

To do so, connecting any zⱼₖ with xₖ^{±} depending on the sign of H_{z}(j,k) as follows, leads to for all relevant j and k, i.e. j,k defining a z node, i.e. Hzⱼₖ ≠ 0 $L \left({z}_{jk}, {x}_{k}^{{H}_{z} \left(j, k\right)}\right) = L .$

These inductors identify the nodes corresponding to the same rotors of the code. This design rule works best when C_{J} is guaranteed to be small compared to all other parameters.

The design rule on a vertex Z-stabilizer and adjacent face X-stabilizer taken from the rotor toric code is shown in Figure 1. ${H}_{Z} \left(j\right) = \left(1 1 0 0 1 1\right)$ ${H}_{X} \left(k\right) = \left(1 -1 1 -1 0 0\right)$

It shows a X-stabilizer given by X₁X₂^{†}X₃X₄^{†} and a Z-stabilizer with index j given by Z₁Z₂Z₅Z₆.

The label of each node next to it is indicated.

Each red or blue capacitor on the right has value C.

Each Josephson Junction has characteristic energy E_{J} and capacitance C_{J}. Inductors have value L. The capacitors to ground, C_{g}, are not drawn, for simplicity.

It is further submitted that for the approximation to work, it is advantageous that the characteristic energies all have different magnitudes and follow the following orders:$EC ≪ {E}_{J} ≪ {E}_{{C}_{g}} ≪ {E}_{{C}_{J}} ,$,${E}_{C} ≪ {E}_{L} ≪ {{E}_{C}}_{g} .$

### Examples

In this section examples are given, some that are 2D local, and some 3D local.

### 1^{st} example: Kitaev Superconducting Current Mirror

Kitaev's superconducting current mirror qubit is recovered with the present rule from the repetition code with a sign twist.

It is showed that the design rule of the invention recovers Kitaev's superconducting current mirror qubit of Kitaev, 2006 from the repetition code with a sign twist.

Starting from H_{Z}=0 and ${H}_{X} = \left(\begin{matrix}1 & - 1 & 0 & ⋯ & 0 \\ 0 & 1 & - 1 & ⋯ & 0 \\ 0 & 0 & 1 & ⋯ & 0 \\ ⋮ & ⋮ & ⋮ & ⋯ & ⋮ \\ 1 & 0 & 0 & ⋯ & 1\end{matrix}\right) ,$ which is just a repetition code where the last closing check has a sign twist.

The sign twist makes it so that only the constant vector of shifts is in the kernel that makes the Z logical operator.

Hence a logical qubit is obtained.

The parameters of the code are [n, (0,2), (1, n)]ᵣₒₜ.

The heavy version is [2n, (0,2), (2, n)]ᵣₒₜ, remarkably not loosing any distance.

The circuit is that of Kitaev's superconducting current mirror qubit.

### 2nd example: the Rotated Sign-Twisted Cylinder Family

In Vuillot, 2023 a family of quantum rotor codes, encoding a logical qubit, based on tessellations of the Möbius strip is presented.

These codes are 2D local but on a surface with the shape of a Möbius strip.

The strip can be flattened in the 2D plane, to implement it on a 2D chip, at the cost of having a bi-layer region.

Such bi-layer region can also be avoided.

Putting the code on a cylinder yields a code encoding a logical rotor as the twist of strip is what constrains the codespace to a logical qubit.

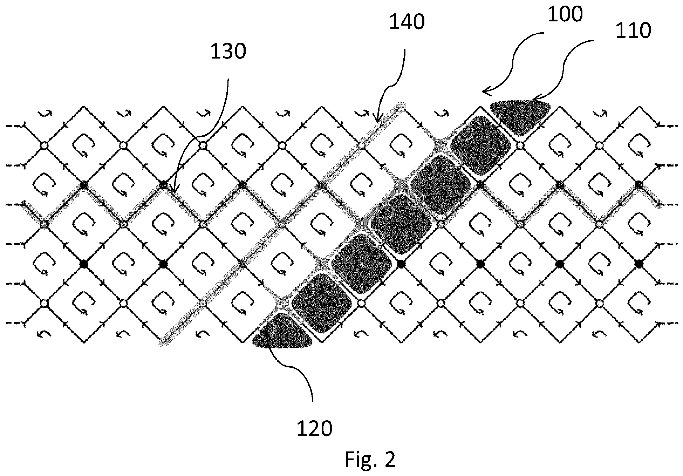

[Fig. 2] Actually this constraint can be enforced, not twisting the geometry of the strip, but the signs of some of the stabilizers across a cut. This is represented in figure 2. The code obtained no longer has an interpretation in terms of tessellation of a 2D manifold because of the sign flips but it is local in 2D on the cylinder which can be flattened to an annulus in the plane, and encodes in this way a logical qubit.

The parameters of this rotated sign-twisted cylinder code can be computed to be the same as that of a rotated Möbius strip ${\left〚LW, \left(0, 2\right), \left(W,Θ\left(LW {sin}^{2}\left(\frac{π}{2 W}\right)\right)\right)\right〛}_{rot} ,$ where W is the width of the strip and L its length both in number of edges.

To balance the distances the smallest L can picked such that $L > {\left({sin}^{2}\left(\frac{π}{2 W}\right)\right)}^{- 1} .$

It may be the case that the charge noise and flux noise are not of the same strength and one may adapt by scaling L or W appropriately.

Figure 2 gives a representation of the rotated and sign-twisted cylinder code with width W=6 and length L=16. Rotors are placed on the edges, X-stabilizers on the square faces, and Z-stabilizers on vertices. The stabilizers are obtained by examining the incidences (edge-face for X and edge-vertex for Z) taking into account the local orientations (given by the curved arrows) drawn.

Some vertices 100 (highlighted) and some faces 110 (highlighted) have been modified. All flipped signed 120 are circled. The modified checks can no longer be interpreted as faces and vertices of a tessellation of a 2D surface but are still local in 2D. The right-hand side attaches to the left-hand side forming a cylinder, without any geometrical twisting.

Highlighted are the support 130 of a logical Z operator and the support 140 for a logical X operator. When crossing the modified plaquette the value of the phase shift on the logical Z operator needs to change sign but being connected at the end they are constrained to π-shifts.

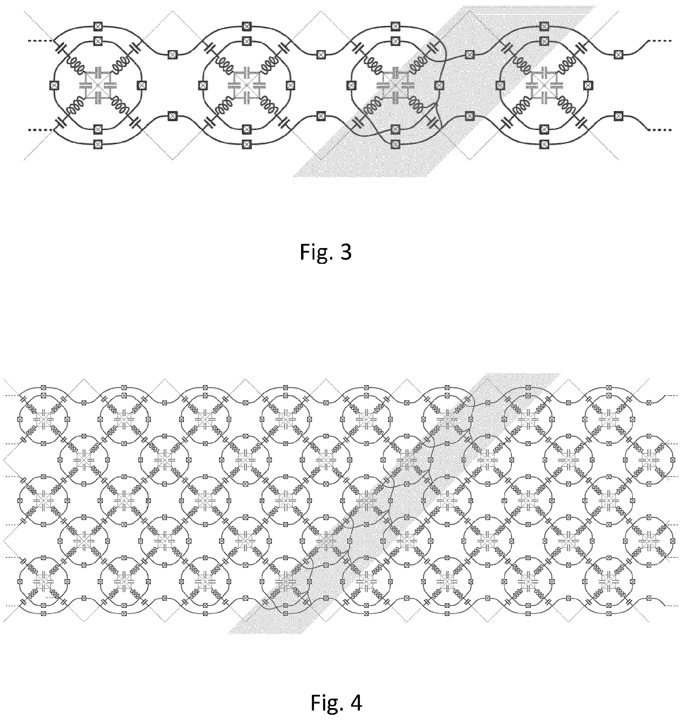

[Fig. 3] A circuit obtained for this rotated twisted-sign cylinder code is represented in figure 3. It is a superconducting circuit corresponding to the circuit rule (first embodiment) applied to the first member of the sign-twisted rotated cylinder family. The rotated square lattice is drawn for reference in light gray. The box highlights the region with the sign twists. The right-end side attaches to the left-hand side forming a cylinder. Capacitors have value C, inductances L and the crossed boxes are Josephson junctions with characteristic energy E_{J} and capacitance C_{J}. Each node is linked to the ground node with capacitor Cg, but this is not represented on the drawing.

[Fig. 4] Another circuit obtained for this rotated twisted-sign cylinder code is represented in figure 4. It is a superconducting circuit corresponding to the circuit rule applied to the third member of the sign-twisted rotated cylinder family. The same comments apply as for figure 3.

### 2nd example: quasi-Cyclic Rotor Codes in 2D

Quasi-cyclic quantum codes disclosed in Wang, 2022 and Panteleev, 2021 are a source of small block codes which can be efficient for their distance and encoding rate.

Similarly as in Bravyi, 2023 good rotor codes which would have a good encoding rate, distance and bi-planar connectivity can be searched for within this family of codes.

The code can be implemented as a superconducting circuit of protected qubits using the design rule of the invention.

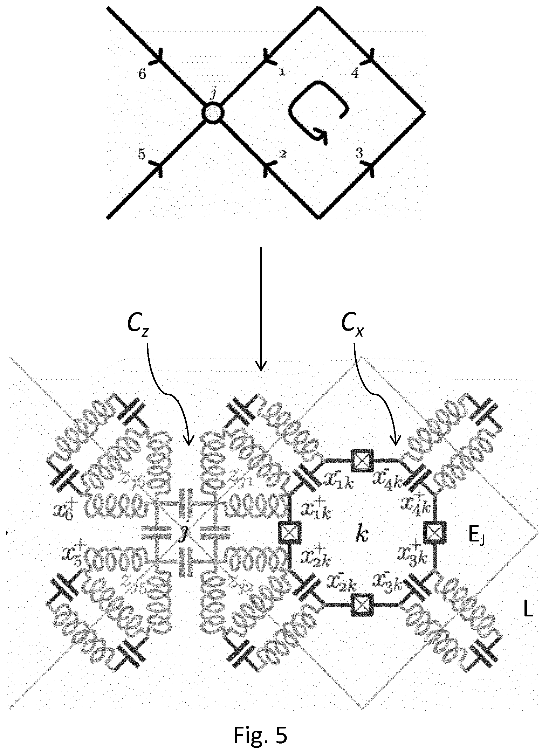

### [Fig.5] Circuit Design Rule - second embodiment (or variant of the Design Rule)

A variant of the circuit design rule which makes a heavier use of inductances to further disconnect the capacitive network to have more control over it is also presented.

Depending on the ease of realization of large inductances this variant may be a better choice in some cases.

The variant is described in Figure 5 and below. It is a variant of the circuit rule disconnecting the X stabilizers.

### A. Defining Nodes

A ground node g is defined.

Then, for each non-zero entry of H_{X} two nodes are created. The nodes corresponding to the position (j,k) are noted xⱼₖ⁺ and xⱼₖ⁻. For each non-zero entry of H_{Z} a node zⱼₖ, corresponding to the position (j,k) is created. In total there are N nodes with $N = 2 {\left|{H}_{X}\right|}_{1} + {\left|{H}_{Z}\right|}_{1} + 1 ,$

If the code is sparse, N is linear in n.

### B. Placing Capacitors

Every node is first connected to the ground node with small capacitor C_{g}, so for all j and k for which Hx(jk) is non zero $C \left({x}_{jk}^{\pm }, g\right) = {C}_{g} ,$

And for all j and k for which Hz(j,k) is non zero $C \left({z}_{jk}, g\right) = {C}_{g} .$

For each row of H_{Z}, indexed by j, a circle of large capacitors C_{z} of a first value and linking the corresponding nodes zⱼₖ with k spanning the non-zero entries of the row is created.

k₁,k₂,...,kₘⱼ being the indices of the non-zero entries of the j^{th} row of H_{Z}, $\begin{matrix}C \left({z}_{{jk}_{1}}, {z}_{{jk}_{2}}\right) = {C}_{z} \\ C \left({z}_{{jk}_{2}}, {z}_{{jk}_{3}}\right) = {C}_{z} \\ ⋮ \\ C \left({z}_{{jk}_{{m}_{j}}}, {z}_{{jk}_{1}}\right) = {C}_{z}\end{matrix}$

For each row of H_{X}, indexed by j, an alternating circle of large capacitor Cx of a second value (different or equal to C_{z}), and Josephson junction E_{J} is created.

With k₁,k₂,....,kₘⱼ the indices of the non-zero entries of the j^{th} row, large capacitors linking x⁺ⱼₖ and x⁻ⱼₖ are put $C \left({x}_{jk}^{+}, {x}_{jk}^{-}\right) = {C}_{x}$

### C. Placing Josephson Junctions

A Josephson junction between is then put x^{±}ⱼₖₗ and x^{±}ⱼₖₗ₊₁ depending on the signs of the j^{th} row of H_{X}. ${s}_{l} = {H}_{X} \left(j, {k}_{l}\right) ,$ $\begin{matrix}J \left({x}_{{jk}_{1}}^{{s}_{1}}, {x}_{{jk}_{2}}^{- {s}_{2}}\right) = {E}_{J} , & C \left({x}_{{jk}_{1}}^{{s}_{1}}, {x}_{{jk}_{2}}^{- {s}_{2}}\right) = {C}_{J} , & \left(B9\right) \\ J \left({x}_{{jk}_{2}}^{{s}_{2}}, {x}_{{jk}_{3}}^{- {s}_{3}}\right) = {E}_{J} , & C \left({x}_{{jk}_{2}}^{{s}_{2}}, {x}_{{jk}_{3}}^{- {s}_{3}}\right) = {C}_{J} , & \left(B10\right) \\ ⋮ & ⋮ & \\ J \left({x}_{{jk}_{{m}_{j}}}^{{s}_{{m}_{j}}}, {x}_{{jk}_{1}}^{- {s}_{1}}\right) = {E}_{J} , & C \left({x}_{{jk}_{{m}_{j}}}^{{s}_{{m}_{j}}}, {x}_{{jk}_{1}}^{- {s}_{1}}\right) = {C}_{J} . & \left(B11\right)\end{matrix}$

Every Josephson junction comes with characteristic energy E_{J} and a small capacitor C_{J}.

### D. Placing Inductances

For each rotor index k, the x⁺-nodes sharing the same index k are connected with inductances L.

The same is done with the x⁻-nodes sharing the same index (k).

So for all k and relevant j and j' (meaning that both Hx(j,k) and Hx(j',k) are non-zero) $L \left({x}_{jk}^{+}, {x}_{j ′ k}^{+}\right) = L ,$ $L \left({x}_{jk}^{-}, {x}_{j ′ k}^{-}\right) = L .$

Finally any zⱼₖ is connected with x_{j'k}^{pm} (for each j' for which x_{j'k} exists, meaning that Hx(j',k) ≠0) depending on the sign of H_{z}(j,k) as follows $L \left({z}_{jk}, {x}_{j ′ k}^{{H}_{z} \left(j, k\right)}\right) = L .$

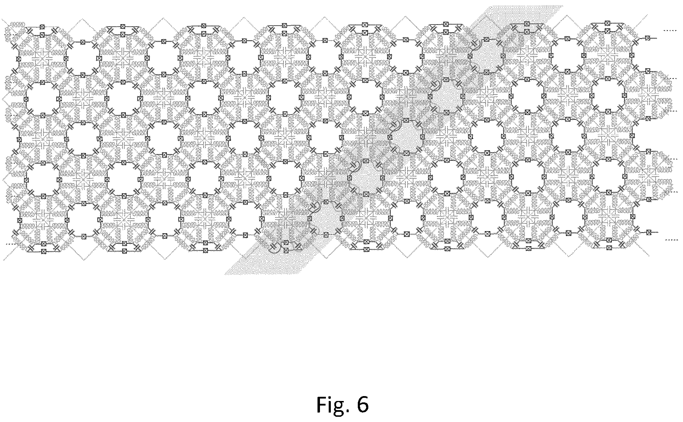

[Fig. 6] In figure 6, a superconducting circuit corresponding to the second embodiment of the circuit rule is applied to the third member of the sign-twisted rotated cylinder family. The same comments apply as for figures 3 and 4.

### References

Kitaev, 2006: A. Kitaev, "Protected qubit based on a superconducting current mirror," 2006.
Brooks, 2013: P. Brooks, A. Kitaev, and J. Preskill, "Protected gates for superconducting qubits," Physical Review A: Atomic, Molecular, and Optical Physics, vol. 87, no. 5, p. 052306, May 2013.
Vuillot, 2023: C. Vuillot, A. Ciani, and B. M. Terhal, "Homological Quantum Rotor Codes: Logical Qubits from Torsion." arXiv, Sep. 28, 2023.
Loffe, 2002: L. B. loffe, M. V. Feigel'man, A. loselevich, D. Ivanov, M. Troyer, and G. Blatter, "Topologically protected quantum bits using Josephson junction arrays," Nature, vol. 415, no. 6871, Art. no. 6871, Jan. 2002.
Gladchenko, 2008: S. Gladchenko, D. Olaya, E. Dupont-Ferrier, B. Dougot, L. B. loffe, and M. E. Gershenson, "Superconducting nanocircuits for topologically protected qubits," Nature Physics, vol. 5, no. 1, pp. 48-53, Nov. 2008.
Weiss, 2019: D. K. Weiss, A. C. Y. Li, D. G. Ferguson, and J. Koch, Physical Review B 100, 224507 (2019).
Wang, 2022: R. Wang and L. P. Pryadko, Symmetry 14, 1348 (2022).
Panteleev, 2021: P. Panteleev and G. Kalachev, Quantum 5, 585 (2021).
Bravyi, 2023: S. Bravyi, A. W. Cross, J. M. Gambetta, D. Maslov, P. Rall, and T. J. Yoder, High-threshold and lowoverhead fault-tolerant quantum memory," (2023).

## Claims

1. Method of designing a superconducting circuit for implementing noise-protected qubits or qudits, the method, for a predefined number of ordered quantum rotors, comprising selecting two initial matrices H_{X} and H_{Z} of an identical number of columns equal to the number of quantum rotors, having all entries in a group of type {-1, 0, +1}, and with H_{X}H_{Z}^{T} = 0, and implementing the following steps to build a circuit
∘ For each quantum rotor creating at least one pair of first type nodes (xₖ⁺, xₖ⁻; xₖⱼ⁺, xₖⱼ⁻) and for each pair of first type nodes placing a first type capacitor (Cₓ) between said two first type nodes of one pair,
∘ Creating a second type node (zⱼₖ) for each of the non-zero entries of the H_{z} matrix, and for each second type node placing inductances (L) between the second type node (zⱼₖ) and the first type nodes associated to the rotors associated to said second type node in the H_{Z} matrix depending on the value of the associated entry of the H_{Z} matrix,
∘ For each row of the H_{Z} matrix, placing second type capacitors between second type nodes to form a connected graph ,
∘ For each row of the H_{X} matrix, placing Josephson Junctions (E_{J}) between first type nodes to form a closed loop with first type capacitors, depending on the content of said row of the H_{X} matrix, Josephson Junctions and first type capacitors being placed alternately in said closed loop.

2. Method of designing a superconducting circuit according to claim 1, **characterized in that** only one pair of first type nodes is created for each quantum rotor.

3. Method of designing a superconducting circuit according to claim 1, **characterized in that** for each quantum rotor several pairs of first type nodes are created on the basis of the Hx matrix.

4. Method of designing a superconducting circuit according to any of claims 1 to 3, **characterized in that** the circuit is an annulus and closing of the circuit is obtained by adapted orientations along a line of rotors.

5. Method of designing a superconducting circuit according to any of claims 1 to 3, **characterized in that** the circuit is a Möbius strip.

6. Method of designing a superconducting circuit according to any of claims 1 to 5, **characterized in that** the two matrices H_{X} and H_{Z} have numbers of non-zero entries in each row and column bounded by a constant.

7. Method of designing a superconducting circuit according to any of claims 1 to 6, **characterized in that** implementing the scheme is done by tessellating a strip with edges embodying the rotors and defining vertices and faces forming respectively for the rotors Z-stabilizers and X stabilizers based on the H_{X} and H_{Z} matrices.

8. Method of designing a superconducting circuit according to any of claims 1 to 7, **characterized in that** the connected graph is a closed loop.

9. Superconducting circuit for implementing noise-protected qubits or qudits obtained by the method of any of claims 1 to 8, wherein the minimal X-distance of the code is 3 or higher than 3.

## Patentansprüche

1. Verfahren zum Entwerfen einer supraleitenden Schaltung zum Implementieren von rauschgeschützten Qubits oder Qudits, wobei das Verfahren für eine vorgegebene Anzahl geordneter Quantenrotoren umfasst: Auswählen zweier Anfangsmatrizen Hₓ und H_{z} mit einer identischen Anzahl von Spalten, die der Anzahl der Quantenrotoren entspricht, wobei alle Einträge aus einer Gruppe vom Typ {-1, 0, +1} stammen, und wobei HₓH_{z}^{T} = 0 gilt, und Durchführen der folgenden Schritte zum Aufbau einer Schaltung:
• Erzeugen für jeden Quantenrotor mindestens eines Paares von Knoten erster Art (Xₖ⁺, Xₖ⁻ ; Xₖⱼ⁺, Xₖⱼ⁻) und Anordnen für jedes Paar von Knoten erster Art eines Kondensators erster Art (Cₓ) zwischen den beiden Knoten erster Art eines Paares,
• Erzeugen eines Knotens zweiter Art (Zⱼₖ) für jeden von Null verschiedenen Eintrag der H_{z}-Matrix und Anordnen für jeden Knoten zweiter Art von Induktivitäten (L) zwischen dem Knoten zweiter Art (Zⱼₖ) und den Knoten erster Art, die den Rotoren zugeordnet sind, die diesem Knoten zweiter Art in der H_{z}-Matrix zugeordnet sind, in Abhängigkeit vom Wert des zugehörigen Eintrags der H_{z}-Matrix,
• Anordnen für jede Zeile der H_{z}-Matrix von Kondensatoren zweiter Art zwischen Knoten zweiter Art, um einen zusammenhängenden Graphen zu bilden,
• Anordnen für jede Zeile der Hₓ-Matrix von Josephson-Kontakten (E_{J}) zwischen Knoten erster Art, um eine geschlossene Schleife mit Kondensatoren erster Art zu bilden, in Abhängigkeit vom Inhalt der jeweiligen Zeile der Hₓ-Matrix, wobei Josephson-Kontakte und Kondensatoren erster Art abwechselnd in der geschlossenen Schleife angeordnet werden.

2. Verfahren zum Entwerfen einer supraleitenden Schaltung nach Anspruch 1, **dadurch gekennzeichnet, dass** nur ein Paar von Knoten erster Art für jeden Quantenrotor erzeugt wird.

3. Verfahren zum Entwerfen einer supraleitenden Schaltung nach Anspruch 1, **dadurch gekennzeichnet, dass** für jeden Quantenrotor mehrere Paare von Knoten erster Art auf der Grundlage der Hₓ-Matrix erzeugt werden.

4. Verfahren zum Entwerfen einer supraleitenden Schaltung nach einem der Ansprüche 1 bis 3, **dadurch gekennzeichnet, dass** die Schaltung ein Anulus ist und der Schluss der Schaltung durch angepasste Orientierungen entlang einer Linie von Rotoren erzielt wird.

5. Verfahren zum Entwerfen einer supraleitenden Schaltung nach einem der Ansprüche 1 bis 3, **dadurch gekennzeichnet, dass** die Schaltung ein Möbiusband ist.

6. Verfahren zum Entwerfen einer supraleitenden Schaltung nach einem der Ansprüche 1 bis 5, **dadurch gekennzeichnet, dass** die beiden Matrizen Hₓ und H_{z} Anzahlen von von Null verschiedenen Einträgen in jeder Zeile und Spalte aufweisen, die durch eine Konstante begrenzt sind.

7. Verfahren zum Entwerfen einer supraleitenden Schaltung nach einem der Ansprüche 1 bis 6, **dadurch gekennzeichnet, dass** das Implementieren des Schemas durch Kacheln eines Streifens mit Kanten, die die Rotoren verkörpern, und durch Definieren von Knotenpunkten und Flächen erfolgt, die jeweils für die Rotoren Z-Stabilisatoren und X-Stabilisatoren bilden, basierend auf den Hₓ- und H_{z}-Matrizen.

8. Verfahren zum Entwerfen einer supraleitenden Schaltung nach einem der Ansprüche 1 bis 7, **dadurch gekennzeichnet, dass** der zusammenhängende Graph eine geschlossene Schleife ist.

9. Supraleitende Schaltung zum Implementieren von rauschgeschützten Qubits oder Qudits, erhalten durch das Verfahren nach einem der Ansprüche 1 bis 8, **dadurch gekennzeichnet, dass** der minimale X-Abstand des Codes 3 oder größer als 3 ist.

## Revendications

1. Procédé de conception d'un circuit supraconducteur pour mettre en œuvre des qubits ou qudits protégés du bruit, le procédé, pour un nombre prédéfini de rotors quantiques ordonnés, comprenant la sélection de deux matrices initiales Hₓ et H_{z} d'un nombre identique de colonnes égal au nombre de rotors quantiques, présentant toutes les entrées dans un groupe de type {-1, 0, +1}, et avec HₓH_{z}^{T} = 0, et la mise en œuvre des étapes suivantes pour construire un circuit
∘ pour chaque rotor quantique, la création d'au moins une paire de nœuds de premier type (Xₖ⁺, Xₖ⁻ ; Xₖⱼ⁺, Xₖⱼ⁻) et, pour chaque paire de nœuds de premier type, le placement d'un condensateur de premier type (Cₓ) entre lesdits deux nœuds de premier type d'une paire,
∘ la création d'un nœud de second type (Zⱼₖ) pour chacune des entrées non nulles de la matrice H_{z} et, pour chaque nœud de second type, le placement d'inductances (L) entre le nœud de second type (Zⱼₖ) et les nœuds de premier type associés aux rotors associés audit nœud de second type dans la matrice H_{z} en fonction de la valeur de l'entrée associée de la matrice H_{z},
∘ pour chaque rangée de la matrice H_{z}, le placement de condensateurs de second type entre des nœuds de second type pour former un graphe connecté,
∘ pour chaque rangée de la matrice Hₓ, le placement de jonctions Josephson (E_{J}) entre des nœuds de premier type pour former une boucle fermée avec des condensateurs de premier type, en fonction du contenu de ladite rangée de la matrice Hₓ, des jonctions Josephson et des condensateurs de premier type étant placés alternativement dans ladite boucle fermée.

2. Procédé de conception d'un circuit supraconducteur selon la revendication 1, **caractérisé en ce qu'**une seule paire de nœuds de premier type est créée pour chaque rotor quantique.

3. Procédé de conception d'un circuit supraconducteur selon la revendication 1, **caractérisé en ce que** pour chaque rotor quantique plusieurs paires de nœuds de premier type sont créées sur la base de la matrice Hx.

4. Procédé de conception d'un circuit supraconducteur selon l'une quelconque des revendications 1 à 3, **caractérisé en ce que** le circuit est un anneau et la fermeture du circuit est obtenue par des orientations adaptées le long d'une ligne de rotors.

5. Procédé de conception d'un circuit supraconducteur selon l'une quelconque des revendications 1 à 3, **caractérisé en ce que** le circuit est une bande de Möbius.

6. Procédé de conception d'un circuit supraconducteur selon l'une quelconque des revendications 1 à 5, **caractérisé en ce que** les deux matrices Hₓ et H_{z} présentent des nombres d'entrées non nulles dans chaque rangée et colonne, limités par une constante.

7. Procédé de conception d'un circuit supraconducteur selon l'une quelconque des revendications 1 à 6, **caractérisé en ce que** la mise en œuvre du système est réalisée par pavage d'une bande avec des bords intégrant les rotors et définissant des sommets et des faces formant, respectivement pour les rotors, des stabilisateurs Z et des stabilisateurs X sur la base des matrices Hₓ et H_{z}.

8. Procédé de conception d'un circuit supraconducteur selon l'une quelconque des revendications 1 à 7, **caractérisé en ce que** le graphe connecté est une boucle fermée.

9. Circuit supraconducteur pour mettre en œuvre des qubits ou qudits protégés du bruit obtenus par le procédé selon l'une quelconque des revendications 1 à 8, dans lequel la distance X minimale du code est égale à 3 ou supérieure à 3.
